# EUROPÄISCHE PATENTSCHRIFT

(11) **EP 1 309 844 B1**
(45) Veröffentlichungstag und Bekanntmachung des Hinweises auf die Patenterteilung: **24.02.2010**
(21) Anmeldenummer: 01962640.7
(22) Anmeldetag: 16.08.2001
(51) Int. Cl.: G01M 15/00

(54) **VERFAHREN UND ANORDNUNG ZUR ABGASUNTERSUCHUNG AN KRAFTFAHRZEUGEN MIT BORDEIGENEM MOTORSTEUERUNGS- UND DIAGNOSESYSTEM**
METHOD AND SYSTEM FOR PERFORMING AN EXHAUST GAS ANALYSIS ON MOTOR VEHICLES HAVING AN ON-BOARD ENGINE CONTROL AND DIAGNOSTIC SYSTEM
PROCEDE ET SYSTEME POUR EXAMINER DES GAZ D'ECHAPPEMENT DANS DES AUTOMOBILES AVEC UN SYSTEME DE COMMANDE DU MOTEUR ET DE DIAGNOSTIC PLACE A BORD

(30) Priorität: 16.08.2000 DE 10039965
(43) Veröffentlichungstag der Anmeldung: 14.05.2003
(73) Patentinhaber: SIEMENS AKTIENGESELLSCHAFT, 80333 München (DE)
(72) Erfinder: HULLER, Dieter, 76275 Ettlingen (DE); LUDWIG, Michael, 76199 Karlsruhe (DE)
(86) Internationale Anmeldenummer: PCT/DE2001/003129
(87) Internationale Veröffentlichungsnummer: WO 2002/014828

(56) Entgegenhaltungen:
- EP-A- 0 816 820
- DE-A- 19 850 990
- US-A- 5 550 740
- US-A- 6 032 088

## Beschreibung

Die Erfindung betrifft ein Verfahren nach dem Oberbegriff des Anspruchs 1. Sie betrifft ferner eine Anordnung nach dem Oberbegriff des Anspruchs 8.

Ein derartiges Verfahren bzw. eine derartige Anordnung ist aus der DE 198 25 023 A2 bekannt. Dort werden die Abgase eines Kraftfahrzeugs mit bordeigenem Motorsteuerungs- und Diagnosesystem (OBD-System) über eine Entnahmeleitung einem Abgastester zugeführt und von diesem analysiert. Der Abgastester erhält von dem OBD-System über dessen Diagnoseschnittstelle die Drehzahlwerte und Bordnetzspannung.

Aus der EP 0 816 820 A2 ist kraftfahrzeugeigenes Motorsteuerungs- und Diagnosesystem (OBD-System) bekannt, bei dem die Motor- und Getriebesteuerung (powertrain controller) über einen bidirektionalen Kommunikationsbus mit einem ebenfalls bordeigenen Abgasanalysator verbunden ist. An eine Ein-/Ausgabe-Schnittstelle des bordeigenen Abgasanalysators kann ein externer Analysator angeschlossen werden, um diesen mit den bordintern erfassten Abgaswerten zu beliefern.

Kraftfahrzeuge müssen aufgrund gesetzlicher Vorschriften in regelmäßigen Zeitabständen einer Abgasuntersuchung unterzogen werden. Die Abgasuntersuchung erfolgt nach einem festgelegten Ablauf mittels eines Abgastesters, wobei das Kraftfahrzeug für einzelne Untersuchungsschritte in vorgegebene Betriebszustände gebracht und für die Dauer des jeweiligen Untersuchungsschrittes gehalten werden muss. Die Einstellung der vorgegebenen Betriebszustände erfolgt durch die Prüfperson nach Vorgabe des üblicherweise auf einem Display dargestellten Untersuchungsablaufs, indem beispielsweise durch Betätigen des Fahrpedals eine vorgegebene Motordrehzahl eingestellt oder durch Abziehen oder Anstecken eines Luftschlauches die geforderte Störgrößenauf- bzw. -abschaltung für die Lambda-Regelung realisiert wird. Vorgegebene Daten des zu untersuchenden Kraftfahrzeuges werden einschließlich der Abgaswerte erfasst, gespeichert und in Form einer Prüfbescheinigung ausgedruckt.

Aufgrund von gesetzlichen Vorschriften, die insbesondere eine Verringerung der Emissionen von Kraftfahrzeugen zum Ziel haben, müssen Neuwagen in den USA seit 1996 und in der Europäischen Union ab dem Jahr 2000 mit bordeigenen Diagnosesystemen, sogenannten On-Board-Diagnostic (OBD)-Systems, ausgestattet sein, die als Bestandteil der bordeigenen Motorsteuerung oder in Zusammenwirken mit dieser mittels geeigneter Sensoren wesentliche Betriebsgrößen des Kraftfahrzeuges sowie dessen Abgaswerte erfassen und durch Vergleich dieser Größen mit vorgegebenen Richtgrößen Fehlfunktionen des Kraftfahrzeuges detektieren. Neben einer Anzeige der Fehlfunktionen an Bord des Kraftfahrzeuges müssen die zu ihrer Identifizierung und Reparatur erforderlichen Informationen über eine Diagnoseschnittstelle bereitgestellt werden.

Die Ausstattung von Kraftfahrzeugen mit bordeigenen Diagnosesystemen wird zumindest insoweit Auswirkungen auf die Abgasuntersuchung haben, als im Rahmen der Abgasuntersuchung aus dem Diagnosesystem aktuelle und/oder gespeicherte abgasrelevante Kraftfahrzeugdaten ausgelesen und mit den übrigen Daten der Abgasuntersuchung protokolliert werden. Dies bedeutet, dass der Abgastester mit der Diagnoseschnittstelle des bordeigenen Diagnosesystems verbunden sein muss.

Der Erfindung liegt die Aufgabe zugrunde, einen weitgehend automatischen Ablauf der Abgasuntersuchung an Kraftfahrzeugen mit bordeigenem Diagnosesystem zu ermöglichen.

Gemäß der Erfindung wird die Aufgabe durch das in Anspruch 1 angegebene Verfahren bzw. die in Anspruch 8 angegebene Anordnung gelöst.

Vorteilhafte Weiterbildungen des erfindungsgemäßen Verfahrens bzw. der erfindungsgemäßen Anordnung sind den Unteransprüchen zu entnehmen.

Der Erfindung liegt die Überlegung zugrunde, dass sich neben den vorgeschriebenen standardisierten, d.h. herstellerunabhängigen, Diagnoseinformationen auch herstellerspezifische Informationen über die Diagnoseschnittstelle auslesen lassen bzw. Steuerkommandos an die Motorsteuerung übertragen lassen. Dementsprechend werden gemäß der Erfindung außerhalb des Motorsteuerungs- und Diagnosesystems des Kraftfahrzeuges, vorzugsweise in dem Abgastester oder einem mit diesem verbundenen Steuergerät, Steuerkommandos erzeugt und über die Diagnoseschnittstelle an das Motorsteuerungssystem übertragen, um dadurch automatisch die für die Abgasuntersuchung jeweils vorgegebenen Betriebszustände des Kraftfahrzeuges einzustellen. Die Steuerkommandos werden dabei vorzugsweise durch Programmablauf in dem Abgastester erzeugt, wobei der Programmablauf zum einen Informationen über den vorgeschriebenen Ablauf der Abgasuntersuchung und zum anderen herstellerspezifische Informationen über die Motorsteuerung des betreffenden Kraftfahrzeuges enthält.

Die bei der Abgasuntersuchung durchlaufenden Betriebszustände des Kraftfahrzeuges werden vorzugsweise zusammen mit den gleichzeitig erfassten Abgaswerten automatisch dokumentiert.

Um einen ordnungsgemäßen Ablauf der Abgasuntersuchung zu gewährleisten, wird die Abgasuntersuchung bzw. werden einzelne Untersuchungsschritte der Abgasuntersuchung in vorteilhafter Weise beim Erreichen der einzustellenden Betriebszustände ausgelöst, wobei das Erreichen der einzustellenden Betriebszustände aufgrund von an dem Kraftfahrzeug erfassten Daten detektiert wird. Zumindest ein Teil dieser Daten kann dabei über die Diagnoseschnittstelle aus dem Motorsteuerungs- und Diagnosesystem ausgelesen werden. Darüber hinaus ist es möglich, ausgewählte Daten auch anderweitig an dem Kraftfahrzeug zu erfassen, indem beispielsweise über den Wechselspannungsanteil der Bordnetzspannung des Kraftfahrzeuges oder mit Hilfe von im Bereich des Motors angebrachten Vibrations-, Geräusch- oder Magnetsensoren die Motordrehzahl erfasst wird.

Ein im Rahmen der Abgasuntersuchung einzustellender vorgegebener Betriebszustand des Kraftfahrzeuges kann beispielsweise durch eine vorgegebene Motordrehzahl bei einer vorgegebenen Betriebstemperatur definiert sein. Die Betriebstemperatur kann dabei in Form der Kühlmitteltemperatur erfasst werden, die als Information über die Diagnoseschnittstelle abrufbar ist. Die Motordrehzahl kann mittels eines an die Motorsteuerung übertragenen Steuerkommandos unmittelbar eingestellt werden, so wie dies beispielsweise innerhalb der Motorsteuerung bei Einstellung einer festen Reisegeschwindigkeit (Tempomat) erfolgt. Es ist aber auch möglich, die Motordrehzahl über ein entsprechendes Steuerkommando zur Veränderung der Drosselklappenstellung zu beeinflussen. Um die einzelnen Betriebszustände des Kraftfahrzeuges definiert einstellen zu können, können für die Betriebszustände charakteristische Daten, hier beispielsweise die Motordrehzahl, an dem Kraftfahrzeug erfasst werden, wobei in Abhängigkeit von diesen Daten die erzeugten Steuerkommandos, hier z.B. zur Änderung der Drosselklappenstellung, im Sinne einer Angleichung des jeweils momentanen Ist-Betriebszustandes an den einzustellenden Soll-Betriebszustand adaptiv verändert werden. Auch hier können die Daten über die Diagnoseschnittstelle ausgelesen oder in sonstiger Weise an dem Kraftfahrzeug erfasst werden.

Zur weiteren Erläuterung der Erfindung wird im folgenden auf die Figuren der Zeichnung Bezug genommen, von denen
- Figur 1: ein erstes Ausführungsbeispiel der erfindungsgemäßen Anordnung und
- Figur 2: ein weiteres Ausführungsbeispiel zeigen.

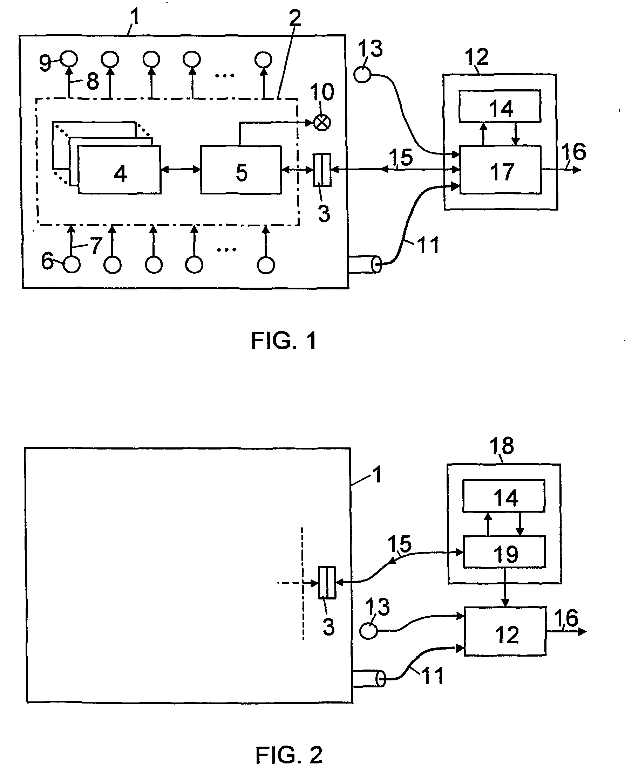

Figur 1 zeigt in Form eines vereinfachten Blockschaltbildes ein Kraftfahrzeug 1, das ein bordeigenes Motorsteuerungs- und Diagnosesystem 2 mit einer Diagnoseschnittstelle 3 aufweist. Das Motorsteuerungs- und Diagnosesystem 2 enthält eine oder mehrere Motorsteuerungsfunktionen 4 und eine Diagnoseeinheit 5, die untereinander Daten austauschen und an der Diagnoseschnittstelle 3 angeschlossen sind. Eine Vielzahl von Sensoren 6 liefert betriebszustandsspezifische Daten 7 an das Motorsteuerungs- und Diagnosesystem 2, welches seinerseits Steuersignale 8 an Aktoren 9 zur Steuerung des Motors und anderer Systeme des Kraftfahrzeuges 1 übermittelt. Die Diagnoseeinheit 5 wertet wesentliche Betriebsgrößen des Kraftfahrzeuges 1, von denen einige Betriebsgrößen Rückschlüsse auf das Abgasverhalten erlauben, aus und zeigt im Falle von zu erwartenden Grenzwertüberschreitungen die Fehlfunktion des Kraftfahrzeuges 1 mittels einer Lampe 10 innerhalb des Kraftfahrzeuges 1 an. Außerdem stellt die Diagnoseeinheit 5 bei Anforderung Informationen über die Diagnoseschnittstelle 3 zur Identifizierung und Reparatur der Fehlfunktion des Kraftfahrzeuges 1, z.B. Fehlercodes, bereit.

Bei der Abgasuntersuchung werden die Abgase des Kraftfahrzeuges 1 über eine Entnahmeleitung 11 einem Abgastester 12 zugeführt und in diesem analysiert. Die Abgasanalyse erfolgt dabei innerhalb einer Test- und Steuereinheit 17 in Abhängigkeit von Daten des Kraftfahrzeuges 1, die über die Diagnoseschnittstelle 3 aus dem Motorsteuerungs- und Diagnosesystem 2 ausgelesen werden, aber auch, wie hier z.B. im Falle der Motordrehzahl, mittels eines geeigneten Sensors 13 an dem Kraftfahrzeug 1 erfasst werden können. Der Ablauf der Abgasuntersuchung wird durch ein Programm gesteuert, welches Informationen über die bei der Abgasuntersuchung zu durchlaufenden Untersuchungsschritte sowie herstellerspezifische Informationen über die Motorsteuerung des Kraftfahrzeuges 1 enthält und in einer Recheneinrichtung 14 abgearbeitet wird. Dabei werden in Abhängigkeit von dem jeweils zu durchlaufenden Untersuchungsschritt spezifische Steuerkommandos 15 erzeugt und von der Test- und Steuereinheit 17 über die Diagnoseschnittstelle 3 an das Motorsteuerungs- und Diagnosesystem 2 zur Einstellung vorgegebener Betriebszustände des Kraftfahrzeuges 1 übertragen. Das Erreichen der jeweils einzustellenden Betriebszustände wird anhand der von dem Motorsteuerungs- und Diagnosesystem 2 bereitgestellten und/oder von dem Sensor 13 erhaltenen Daten detektiert, woraufhin der entsprechende Untersuchungsschritt mit der Abgasanalyse durchgeführt wird. Die dabei erhaltenen Abgaswerte werden zusammen mit den anderen von dem Kraftfahrzeug 1 erhaltenen Daten in einem Prüfprotokoll 16 ausgegeben.

Bei der in Figur 2 gezeigten Ausführungsvariante der erfindungsgemäßen Anordnung werden die Steuerkommandos 15 zur Einstellung vorgegebener Betriebszustände des Kraftfahrzeuges 1 in einem Steuergerät 18, beispielsweise einem Diagnosegerät, erzeugt, welches darüber hinaus den Abgastester 12 steuert. Dazu enthält das Steuergerät 18 neben einer mit der Diagnoseschnittstelle 3 des Kraftfahrzeuges 1 verbundenen Diagnose- und Steuereinheit 19 auch eine Recheneinheit 14, in der ein den Ablauf der Abgasuntersuchung steuerndes Programm abgearbeitet wird. Wenn aufgrund eines Steuerkommandos 15 ein für einen bestimmten Untersuchungsschritt vorgeschriebener Betriebszustand des Kraftfahrzeuges 1 erreicht wird, wird der Abgastester 12 zur Durchführung der Abgasanalyse in dem betreffenden Untersuchungsschritt angesteuert

## Patentansprüche

1. Verfahren zur Abgasuntersuchung an Kraftfahrzeugen (1) mit bordeigenem Motorsteuerungs- und Diagnosesystem (2) und Diagnoseschnittstelle (3), wobei die Abgase über eine Entnahmeleitung (11) einem Abgastester (12) zugeführt und von diesem analysiert werden, **dadurch gekennzeichnet, dass** außerhalb des Motorsteuerungs- und Diagnosesystems (2) Steuerkommandos (15) erzeugt und über die Diagnoseschnittstelle (3) an das Motorsteuerungs- und Diagnosesystem (2) übertragen werden, welches in Abhängigkeit von den Steuerkommandos (15) für die Abgasuntersuchung vorgegebene Betriebszustände des Kraftfahrzeuges (1) einstellt.

2. Verfahren nach Anspruch 1, **dadurch gekennzeichnet, dass** die Steuerkommandos (15) durch Programmablauf in dem Abgastester (12) erzeugt werden.

3. Verfahren nach Anspruch 1, **dadurch gekennzeichnet, dass** die Steuerkommandos (15) durch Programmablauf in einem den Abgastester (12) steuernden Steuergerät (18) erzeugt werden.

4. Verfahren nach einem der vorangehenden Ansprüche, **dadurch gekennzeichnet, dass** die bei der Abgasuntersuchung durchlaufenen Betriebszustände des Kraftfahrzeuges (1) zusammen mit gleichzeitig erfassten Abgaswerten automatisch dokumentiert werden.

5. Verfahren nach einem der vorangehenden Ansprüche, **dadurch gekennzeichnet, dass** die Abgasuntersuchung oder einzelne Untersuchungsschritte der Abgasuntersuchung beim Erreichen der einzustellenden Betriebszustände ausgelöst wird bzw. ausgelöst werden, wobei das Erreichen der einzustellenden Betriebszustände aufgrund von an dem Kraftfahrzeug (1) erfassten Daten selektiert wird.

6. Verfahren nach einem der vorangehenden Ansprüche, **dadurch gekennzeichnet, dass** für die einzelnen Betriebszustände charakteristische Daten an dem Kraftfahrzeug (1) erfasst werden aufgrund derer die erzeugten Steuerkommandos (15) im Sinne einer Angleichung des jeweils momentanen Ist-Betriebszustandes an den einzustellenden Soll-Betriebszustand adaptiv verändert werden.

7. Verfahren nach Anspruch 5 oder 6, **dadurch gekennzeichnet, dass** zumindest ein Teil der Daten über die Diagnoseschnittstelle (3) aus dem Motorsteuerungs- und Diagnosesystem (2) ausgelesen wird.

8. Anordnung zur Abgasuntersuchung an Kraftfahrzeugen (1) mit bordeigenem Motorsteuerungs- und Diagnosesystem (2) und Diagnoseschnittstelle (3), wobei die Abgase über eine Entnahmeleitung (11) einem Abgastester (12) zugeführt und von diesem analysiert werden, **dadurch gekennzeichnet, dass** außerhalb des Motorsteuerungs- und Diagnosesystems (2) eine Einheit (14) zur Erzeugung von Steuerkommandos (15) und zu ihrer Übertragung über die Diagnoseschnittstelle (3) an das Motorsteuerungs- und Diagnosesystem (2) vorgesehen ist, und dass das Motorsteuerungs- und Diagnosesystem (2) zur Einstellung von für die Abgasuntersuchung vorgegebenen Betriebszuständen des Kraftfahrzeuges in Abhängigkeit von den Steuerkommandos (15) ausgebildet ist.

9. Anordnung nach Anspruch 8, **dadurch gekennzeichnet, dass** die Einheit (14) in dem Abgastester (12) integriert ist.

10. Anordnung nach Anspruch 8, **dadurch gekennzeichnet, dass** die Einheit (14) in einem den Abgastester (12) steuernden Steuergerät (18) integriert ist.

11. Anordnung nach Anspruch 8 oder 9, **dadurch gekennzeichnet, dass** der Abgastester (12) eine Ausgabeeinheit zur Ausgabe der bei der Abgasuntersuchung durchlaufenen Betriebszustände des Kraftfahrzeuges (1) zusammen mit gleichzeitig erfassten Abgaswerten aufweist.

## Claims

1. Method for analysing exhaust gas in motor vehicles (1) with an on-board engine management and diagnostics system (2) and diagnostic interface (3), with the exhaust gas being fed to the exhaust gas tester (12) via an extraction line (11) and being analysed by said tester, **characterised in that** control commands (15) are generated outside the engine management and diagnostics system (2) and are transmitted via the diagnostic interface (3) to the engine management and diagnostics system (2) which, depending on the control commands (15), sets operating states of the motor vehicle (1) predetermined for the exhaust gas analysis.

2. Method according to claim 1, **characterised in that** the control commands (15) are generated by the programme sequence in the exhaust gas tester (12).

3. Method according to claim 1, **characterised in that** the control commands are generated by the programme sequence in a control device (18) controlling the exhaust gas tester (12).

4. Method according to one of the previous claims, **characterised in that** the operating states of the motor vehicle (1) executed during the exhaust gas analysis are automatically documented by exhaust gas values recorded at the same time.

5. Method according to one of the previous claims, **characterised in that** the exhaust gas analysis or individual analysis steps of the exhaust gas analysis is or are initiated when the operating states to be set are reached, with the reaching of the operating steps to be set being detected on the basis of the data recorded in the motor vehicle.

6. Method according to one of the previous claims, **characterised in that** characteristic data for the individual operating states is recorded at the motor vehicle (1) as a result of which the generated control commands (15) will be adaptively modified in the sense of a synchronisation of the respective current actual operating state to the required operating state to be set.

7. Method according to claim 5 or 6, **characterised in that** a least one part of the data is read out by the diagnostic interface (3) from the engine management and diagnostics system (2).

8. Arrangement for analysing exhaust gas in motor vehicles (1) with an on-board engine management and diagnostics system (2) and diagnostic interface (3), with the exhaust gas being fed to the exhaust gas tester (12) via an extraction line (11) and being analysed by said tester, **characterised in that** a unit is provided for generating control commands (15) and for transmitting them via the diagnostic interface (3) to the engine management and diagnostics system, and that the engine management and diagnostics system (2) is embodied for setting operating states of the motor vehicle predetermined for the exhaust analysis as a function of the control commands (15).

9. Arrangement according to claim 8, **characterised in that** the unit (14) is integrated in the exhaust gas tester (12).

10. Arrangement according to claim 8, **characterised in that** the unit is integrated in a control device (18) controlling the exhaust gas tester (12).

11. Arrangement according to claim 8 or 9, **characterised in that** the exhaust gas tester (12) has an output unit for outputting the operating states of the motor vehicle (1) executed during the exhaust gas analysis together with the exhaust gas values recorded at the same time.

## Revendications

1. Procédé d'examen des gaz d'échappement de véhicules ( 1 ) automobiles ayant un système de commande du moteur et de diagnostic du moteur à bord et une interface ( 3 ) de diagnostic, les gaz d'échappement étant envoyés par un conduit ( 11 ) de prélèvement à un dispositif ( 12 ) de test des gaz d'échappement et étant analysés par celui-ci, **caractérisé en ce que** l'on produit, en dehors du système ( 2 ) de commande du moteur et de diagnostic du moteur, des instructions ( 15 ) de commande et on les transmet par l'interface ( 3 ) de diagnostic au système ( 2 ) de commande du moteur et de diagnostic du moteur qui règle, en fonction des instructions ( 15 ) de commande, des états de fonctionnement du véhicule automobile prescrites pour l'examen des gaz d'échappement.

2. Procédé suivant la revendication 1, **caractérisé en ce que** l'on produit les instructions ( 15 ) de commande par déroulement d'un programme dans le dispositif ( 12 ) de test des gaz d'échappement.

3. Procédé suivant la revendication 1, **caractérisé en ce que** l'on produit les instructions ( 15 ) de commande par déroulement d'un programme dans un appareil ( 18 ) de commande commandant le dispositif ( 12 ) de test des gaz d'échappement.

4. Procédé suivant l'une des revendications précédentes, **caractérisé en ce que** l'on documente automatiquement, ensemble avec des valeurs de gaz d'échappement relevées en même temps, des états de fonctionnement du véhicule ( 1 ) automobile se produisant pendant l'examen des gaz d'échappement.

5. Procédé suivant l'une des revendications précédentes, **caractérisé en ce que** l'on déclenche l'examen des gaz d'échappement ou des stades individuels de l'examen des gaz d'échappement lorsque des états de fonctionnement à établir sont atteints, le fait que des états de fonctionnement à établir est atteint étant détecté sur la base de données relevées sur le véhicule ( 1 ) automobile.

6. Procédé suivant l'une des revendications précédentes, **caractérisé en ce que** l'on relève sur le véhicule automobile des données caractéristiques des divers états de fonctionnement, sur la base desquelles on modifie de façon adaptative les instructions ( 15 ) de commande produites dans le sens d'une adaptation de l'état de fonctionnement réel instantané à l'état de fonctionnement de consigne à établir.

7. Procédé suivant la revendication 5 ou 6, **caractérisé en ce qu'**on lit dans le système ( 2 ) de commande du moteur et de diagnostic du moteur au moins une partie des données par l'intermédiaire de l'interface ( 3 ) de diagnostic.

8. Dispositif d'examen de gaz d'échappement de véhicule ( 1 ) à moteur comprenant un système ( 2 ) de commande du moteur et de diagnostic du moteur à bord et une interface ( 3 ) de diagnostic, les gaz d'échappement étant envoyés par un conduit ( 11 ) de prélèvement à un dispositif ( 12 ) de test des gaz d'échappement et étant analysés par celui-ci, **caractérisé en ce qu'**en dehors du système ( 2 ) de commande du moteur et de diagnostic du moteur est prévue une unité ( 14 ) pour la production d'instructions ( 15 ) de commande et pour leur transmission au système ( 2 ) de commande du moteur et de diagnostic du moteur par l'intermédiaire de l'interface ( 3 ) de diagnostic et **en ce que** le système ( 2 ) de commande du moteur et de diagnostic du moteur est constitué en fonction des instructions ( 15 ) de commande pour établir les états de fonctionnement du véhicule automobile prescrits pour l'examen des gaz d'échappement.

9. Dispositif suivant la revendication 8, **caractérisé en ce que** l'unité ( 14 ) est intégrée dans le dispositif ( 12 ) de test des gaz d'échappement.

10. Dispositif suivant la revendication 8, **caractérisé en ce que** l'unité ( 14 ) est intégrée dans un appareil ( 18 ) de commande commandant le dispositif ( 12 ) de test des gaz d'échappement.

11. Dispositif suivant la revendication 8 ou 9, **caractérisé en ce que** le dispositif ( 12 ) de test des gaz d'échappement comporte une unité pour sortir les états de fonctionnement du véhicule ( 1 ) automobile se produisant pendant l'examen des gaz d'échappement, ensemble avec des valeurs de gaz d'échappement relevées simultanément.
